# EUROPEAN PATENT APPLICATION

(11) **EP 2 949 968 A1**
(43) Date of publication of application: **02.12.2015**
(21) Application number: 14743331.2
(22) Date of filing: 22.01.2014
(51) Int. Cl.: F16H 25/24, F16C 37/00

(54) **BALL SCREW DEVICE**

(30) Priority: 25.01.2013 JP 2013012187
(71) Applicant: NSK Ltd., Tokyo 141-8560 (JP)
(72) Inventor: NAGAI, Yutaka, Fujisawa-shi Kanagawa 252-0811 (JP)
(74) Representative: Klingseisen, Franz
(86) International application number: PCT/JP2014/000305
(87) International publication number: WO 2014/115544

(57) **Abstract**

There is provided a ball screw device having a cooling mechanism of efficiently cooling down a bearing device supporting a screw shaft of a ball screw or vicinities of the bearing device. For this purpose, the ball screw device (1) includes the ball screw (10) and a bearing device (101) supporting at least one end of the screw shaft (110). The bearing device (101) includes a housing (130) rotatably supporting the screw shaft (110). The housing (130) has plural cooling through holes (170) penetrating in the axial direction and allowing passage of a cooling medium. In addition, a combination type of rolling bearings (120A, 120B) of the bearing device (101) is to be a DB type (back face combination type), which is a system of applying a preload by adding a compressive force in the axial direction to the inner ring side of the rolling bearings (120A, 120B).

## Description

### Technical Field

This disclosure relates to a ball screw device including a ball screw and a bearing device configured to rotatably support an end of a screw shaft of the ball screw.

### Background Art

The ball screw includes a nut having a spiral groove formed on its inner circumferential surface, a screw shaft having a spiral groove formed on its outer circumferential surface, and balls loaded in a raceway formed with the spiral groove of the nut and the spiral groove of the screw shaft.

The ball screw, which is used as a precision feeding mechanism of a machine tool, an injection molding machine, a semiconductor element manufacturing device, or the like, has high temperatures when used in high speeds and high cycles, and the screw shaft and the nut are thermally deformed (the screw shaft is elongated by the thermal expansion). Along with this, a load distribution abnormality of the balls or degradation in operation performance is caused, positioning accuracy as the feeding mechanism degrades. For this reason, in the ball screw for which high positioning accuracy is demanded, measures are taken to cool down the screw shaft, the nut, and the bearing device arranged at an end of the screw shaft.

Patent Literature 1 discloses that the nut and the rolling bearing are cooled down by providing gaps between a housing into which an outer ring of the rolling bearing rotatably supporting an end of the screw shaft is internally fit and a main body frame secured through an insulation material to the housing, and between the nut and the moving element secured through an insulation material to the nut, respectively, so that cooling air is fed into the respective gaps.

A lso, Patent Literature 2 discloses a ball screw with a nut having a cooling mechanism.

### Citation List

### Patent Literature

PLT1: JP Utility Model Publication Number H01-117847
PLT2: JP 2011-17419 A
PLT3: JP 20610307

### Summary

### Technical Problem

In the technology disclosed in PLT 1, however, the cooling efficiency of the rolling bearing can be improved. To be specific, the outer circumferential part of the housing is cooled down, instead of the bearing device that is a heat generation source or its vicinities.. Hence, the rolling bearing is not cooled down efficiently.

Therefore, the present invention has been made in view of the above-described circumstances, and has an object of providing a ball screw device capable of efficiently cooling down a rolling bearing rotatably supporting an end of a screw shaft of a ball bearing, or vicinities of a bearing device.

### Solution to Problem

In order to address the above object, there is provided a ball screw device, including: a nut having a spiral groove formed on an inner circumferential surface; a screw shaft having a spiral groove formed on an outer circumferential surface; balls loaded in a raceway formed with the spiral groove of the nut and the spiral groove of the screw shaft; and a bearing device configured to support an end of the screw shaft, the bearing device including: a plurality of bearings having inner rings fit with the end of the screw shaft and rotating integrally with the screw shaft, and outer rings rotatably supporting the inner rings via a plurality of rolling elements arranged on outer circumferential surfaces of the inner rings; and a housing having an inner circumferential surface abutting with the outer circumferential surfaces of the outer rings and rotatably supporting the screw shaft, wherein a plurality of cooling through holes penetrating through both ends of the housing for allowing passage of a cooling medium are arranged in an axial direction of the housing.

In the above-described ball screw device, the bearing device may support one of ends of the screw shaft.

In the above-described ball screw device, the plurality of cooling through holes penetrating through the both ends of the housing and allowing the passage of the cooling medium may be arranged in the axial direction of the housing, in the bearing device supporting the one of the ends of the screw shaft, and another bearing device supporting the other one of the ends of the screw shaft does not have a cooling through hole.

In the above-described ball screw device, the bearing device and another bearing device may support both ends of the screw shaft, respectively.

In the above-described ball screw device, the plurality of cooling through holes penetrating through the both ends of the housing for allowing the passage of the cooling medium may be arranged in the axial direction of the housings in each of the bearing device or the another bearing device.

In the above-described ball screw device, a channel communicating with at least one of the plurality of cooling through holes may be formed at an end face of the housing..

In the above-described ball screw device, the plurality of cooling through holes may be communicated by a pipe arrangement via a joint member at an outside of the housing.

In the above-described ball screw device, the plurality of cooling through holes may be equally arranged in a circumferential direction of the housing.

By arranging the cooling through holes as described above, it is possible to cool down the housing in the circumferential direction equally by use of the cooling through holes arranged at the inside of the housing closer to the rolling bearing, instead of the outside of the housing Thus, it is possible to more efficiently cool down the rolling bearing rotatably supporting an end of the screw shaft of the ball screw than the method of cooling down the outside of the housing, as disclosed in PLT 1.

In the above-described ball screw device, the plurality of cooling through holes may include three to six cooling through holes.

As the number of the cooling through holes is increased, the cooling effect can be improved. However, the mechanical strength of the housing degrades and the processing cost increases. Besides, in a case where there are two cooling through holes, even if they are arranged equally in the circumferential direction, the arrangement interval is large. Hence, the temperature gradient is produced and the housing is thermally deformed easily.

For this reason, three to six cooling through holes are arranged, in one embodiment

In the above-described ball screw device, the plurality of cooling through holes may be arranged on either an end side of the screw shaft or a flange side.

In the above-described ball screw device, a heat dissipation portion may be arranged at the housing.

The above-described ball screw device may further include pressing lids configured to limit movements of the outer rings in the axial direction, respectively, and heat dissipation portions may be arranged at the pressing lids, respectively.

In the above-described ball screw device, a cooling passage for allowing the passage of the cooling medium may be bored in the screw shaft, and the cooling passage is bored to a location corresponding to the plurality of bearings in the axial direction of the screw shaft.

In the above-described ball screw device, at least one of the bearing device and another bearing device arranged at both ends of the ball screw, and the bearing device and the another bearing device may be configured to be a DF type..

### Advantageous Effects

According to the ball screw device in the present disclosure, it is possible to efficiently cool down the rolling bearing rotatably supporting an end of the screw shaft of the ball screw or vicinities of the bearing device.

### Brief Description of Drawings

FIG. 1 is a front view illustrative of a configuration of a ball screw device in a first embodiment.;
FIG. 2 is a front view illustrative of a configuration of a bearing device in the first embodiment;
FIG. 3 is an arrow a view of FIG. 2;
FIG. 4 is an arrow b view of FIG. 2;
FIG. 5 is a cross-sectional view taken along line V-V of FIG. 4;
FIG. 6 is a plan view illustrative of a pressing lid included in a bearing device of FIG. 2;

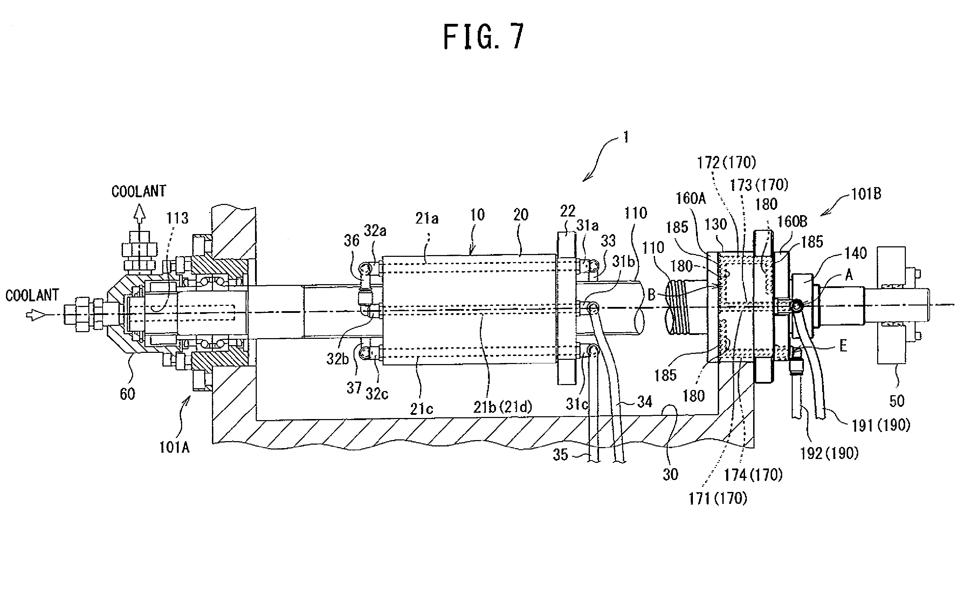

FIG. 7 is a front view illustrative of a configuration in another example of the ball screw device in the first embodiment;
FIG. 8 is a front view illustrative of a configuration of the bearing device in the ball screw device in a second embodiment;
FIG. 9 is a right side view illustrative of a configuration of the bearing device in the ball screw device in the second embodiment;
FIG. 10 is a left side view illustrative of a configuration of the bearing device in the ball screw device in the second embodiment;
FIG 11 is a cross-sectional view in an axial direction illustrative of a configuration of the bearing device in the ball screw device in the second embodiment;
FIG. 12 is a cross-sectional view in the axial direction illustrative of a configuration of the bearing device in the ball screw device in a third embodiment;
FIG. 13A to FIG. 13C are views illustrative of a configuration of the bearing device in the ball screw device in a fourth embodiment, in which FIG. 13A is a front view, FIG. 13B is a left side view, and FIG. 13C is a right side view;
FIG. 14A to FIG. 14D are views illustrative of a configuration of the bearing device in the ball screw device in a fifth embodiment, in which FIG 14A is a front view, FIG. 14B is a left side view, FIG. 14C is a right side view of a heat dissipation portion, and FIG. 14D is a perspective view of a fin;
FIG. 15A to FIG. 15C are views illustrative of a configuration of the bearing device in the ball screw device in a sixth embodiment, in which FIG. 15A is a front view, FIG. 15B is a right side view, and FIG. 15C is a right side view of a frame body provided with a fin;
FIG. 16 is a front view illustrative of the ball screw device in a seventh embodiment;
FIG. 17A to FIG. 17C are views illustrative of a configuration of the ball screw device in the seventh embodiment, in which FIG. 17A is a front view of the bearing device on a non-motor side, FIG. 17B is a cross-sectional view in the axial direction of the screw shaft and an enlarged view illustrative of substantial parts, and FIG. 17C is a left side view of the screw shaft;
FIG. 18 is a cross-sectional view in the axial direction illustrative of a configuration of the ball screw device in an eighth embodiment; and
FIG. 19A to FIG. 19C are views illustrative of a configuration of the ball screw device in a ninth embodiment, in which FIG. 19A is a front view of the ball screw device, FIG. 19B is a front view illustrative of the bearing device on a non-motor side, and FIG. 19C is a front view of the bearing device on a motor side.

### Description of Embodiments

### (First embodiment)

Hereinafter, a ball screw device in a first embodiment will be described with reference to the drawings.

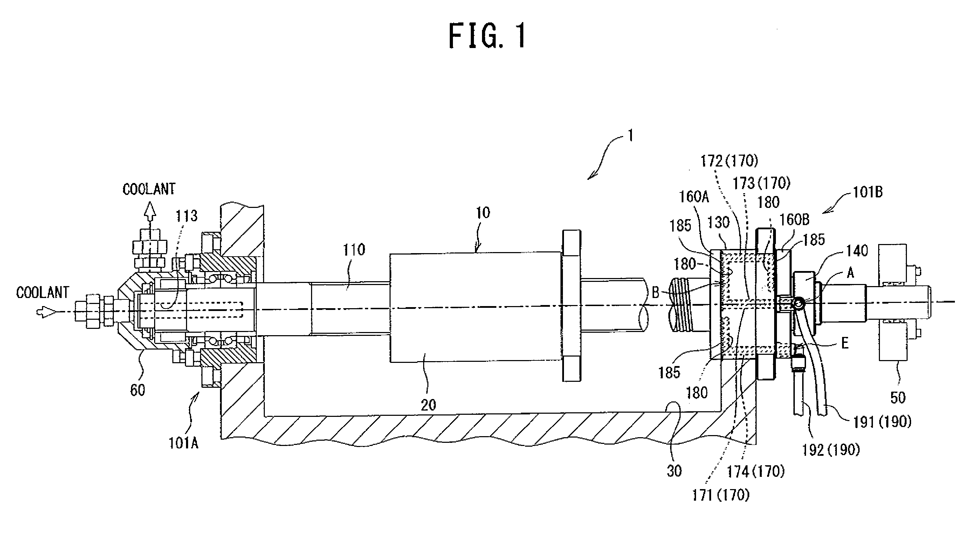

The ball screw device 1 in the present embodiment includes a ball screw 10, and a bearing device 101 supporting a screw shaft 110 of the ball screw 10, as illustrated in FIG. 1

Herein, a drive pulley 60 is attached to one end (a shaft end on the right side in the drawing) of the screw shaft 110, and the rotational movement of the electric motor (not illustrated) is transmitted through a power transmission mechanism to the drive pulley 60, so that the ball screw 10 is to be driven. Hereinafter, a bearing device 101B on the near side of the drive pulley 60 (on the near side of the electric motor, not illustrated) will be also referred to as "motor side bearing device 101B", whereas a bearing device 101A on the far side of the drive pulley 60 (on the far side of the electric motor, not illustrated) will be also referred to as "non-motor side bearing device 101A".

### (Ball screw)

The ball screw device 1 includes a screw shaft 110, a nut 20, and balls (not illustrated) loaded to be capable of rolling in spiral grooves formed to face each of the outer circumferential surface of the screw shaft 110 and the inner circumferential surface of the nut 20. Then, when the nut 20 into which the screw shaft 110 is screwed and the screw shaft 110 are made to relatively rotate through the balls, the screw shaft 110 and the nut 20 relatively move in an axial direction through the rolling of the balls.

In the ball screw device 1, at least one end of the screw shaft 110 of the ball screw 10 is rotatably supported by a bracket 40 through the bearing devices 101A and 101B, and in addition, the nut 20 is secured to a table 50.

### (Bearing device)

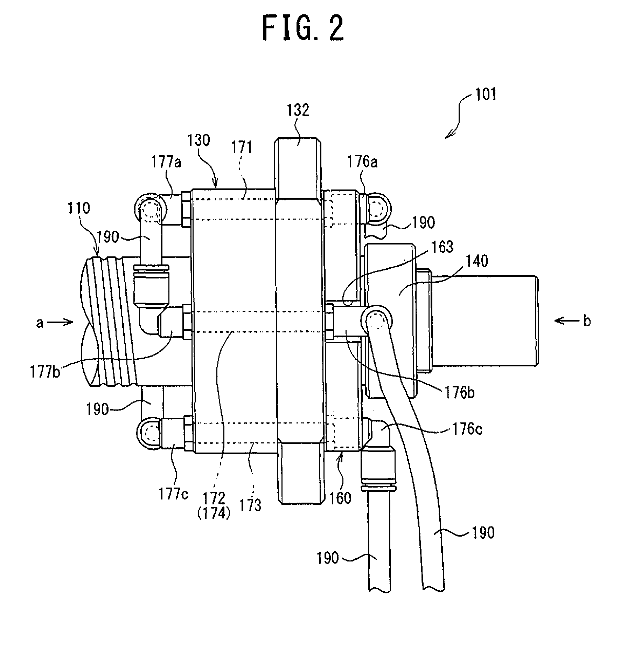

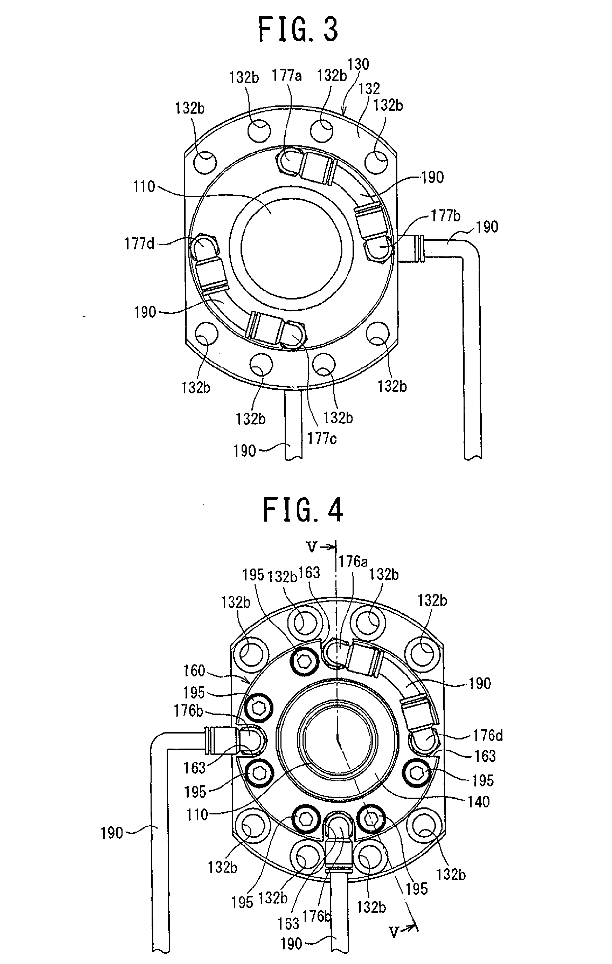

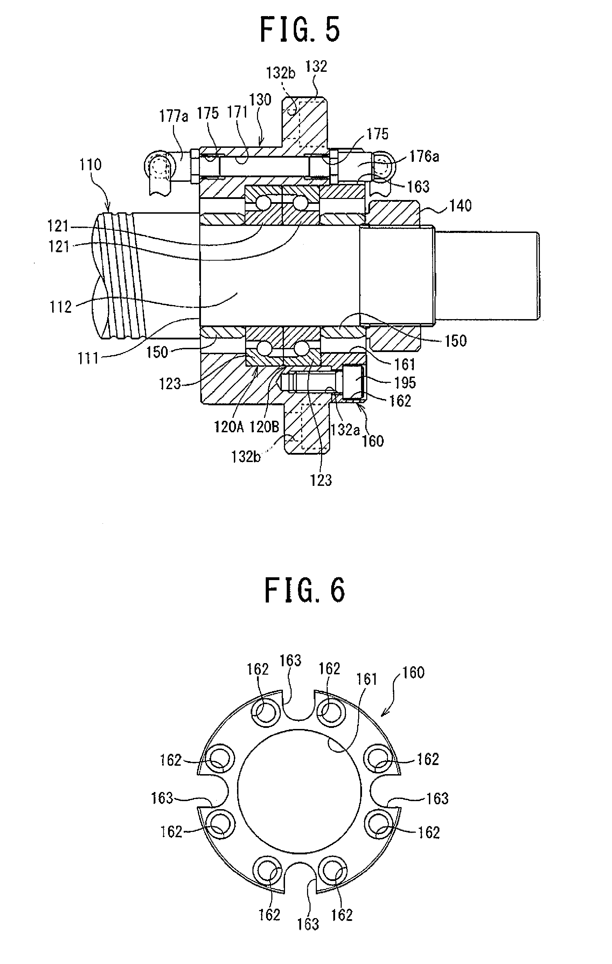

The bearing device 101 includes, as illustrated in FIG. 5, two rolling bearings 120 that rotatably supports at least one end 112 of the screw shaft 110 of the ball screw 10, and a housing 130 into which outer rings 123 of both rolling bearings 120 are inserted.. Also, the bearing device 101 includes a collar 150 and a lock nut 140 configured to limit the movement in the axial direction of the inner rings 121 of the rolling bearings 120, and a pressing lid 160 configured to limit the movement in the axial direction of the outer rings 123. Further, the bearing device 101 includes, as illustrated in FIG. 2 to FIG. 5, joint members 176a to 176d and 177a to 177d, plural pipe arrangements 190, and a bolt 195 securing the pressing lid 160 to the housing 130.

Each end 112 of the screw shaft 110 is a small-diameter portion, and one collar 150 is arranged between a step portion of the end portion 112 and the inner ring 121 of the rolling bearing 120A, which is one of the rolling bearings. Another collar 150 is also arranged at the outside of the inner ring 121 of another rolling bearing 120B (on the opposite side to the side where the rolling bearing 120A, which is one of the rolling bearings, is arranged with respect to the rolling bearing 120B as a reference). Further, a lock nut 140 is arranged on the outer side of the collar 150. The outer rings 123 of the rolling bearings 120A and 120B are arranged at a large-diameter portion of the inner circumferential surface of the housing 130. An end face of the outer ring 123 of the rolling bearing 120A, which is one of the rolling bearings, abuts with a step face, whereas the outer ring 123 of the rolling bearing 120B, which is the other one of the rolling bearings, abuts with an end face of the pressing lid 160..

As illustrated in FIG. 2 to FIG. 5, flanges 132 are formed at an end in the axial direction of the housing 130. Female screws 132a into which the bolts 195 are screwed and bolt openings 132b into which the attachment bolts are inserted are formed at the flanges 132, respectively. In addition, at the housing 130, four cooling through holes 171 to 174 that penetrate in the axial direction are formed at an equal interval in a circumferential direction. Taper female screw portions 175 for pipes are formed on both end portions of each of the cooling through holes 171 to 174.

As illustrated in FIG. 6, the pressing lid 160 has a disc-shaped member having a central opening 161 with a size at which the screw shaft 110 is loosely fit thereinto, and eight bolt openings 162 into which the head sides of the bolts 195 are arranged are respectively formed in eight places at an equal interval in the circumferential direction. The bolt openings 162 are arranged at locations respectively corresponding to the female screws 132a of the housing 130. Further, depressions 163 are formed at the outer circumference of the pressing lid 160, at locations respectively corresponding to the cooling through holes 171 to 174 of the housing 130.

In the assembling, firstly, after one of the collars 150 is brought into contact with the step portion of the end 112 of the screw shaft 110 and attached thereto, the rolling bearings 120A and 120B are attached between the housing 130 and the end 112 of the screw shaft 110. Then, the screw shaft 110 is penetrated through the central opening 161 of the pressing lid 160, the pressing lid 160 is arranged at the flange 132 side of the housing 130, and the bolt 195 is inserted from the bolt opening 162 of the pressing lid 160 to screw the bolt 195 into the female screw 132a of the flange 132. Next, the other collar 150 is attached to the end 112 of the screw shaft 110, and the lock nut 140 is fastened.. Thus, the outer rings 123 of the bearings 120A and 120B are secured to the housing 130, and the inner rings 121 are secured to the ends 112 of the screw shaft 110, respectively.

In this state, the respective joint members 176a to 176d and 177a to 177d are inserted from the depressions 163 of the pressing lid 160. Then, as illustrated in FIG.. 5, their ends (taper male screw portions for pipes) are screwed into the taper female screw portions 175 for pipes of the cooling through holes 171 to 174, respectively. Hence, as illustrated in FIG. 2 to FIG.. 4, the respective joint members 176a to 176d and 177a to 177d are respectively coupled with both ends of the cooling through holes 171 to 174 of the housing 130.

Then, the joint member 176a and the joint member 176d on the flange 132 side are coupled by a pipe arrangement 190. The pipe arrangement 190 for cooling medium introduction is connected to the joint member 176b on the flange 132 side. The pipe arrangement 190 for cooling medium discharge is connected to the joint member 176c on the flange 132 side. On the side where no flange 132 of the housing 130 is formed, the joint member 177a and the joint member 177b are coupled by the pipe arrangement 190, whereas the joint member 177c and the joint member 17 7d are coupled by the pipe arrangement 190.

In the ball screw in the present embodiment, the cooling medium that has been introduced from the pipe arrangement 190 for cooling medium introduction is configured to sequentially flow in an order of the joint member 176b, the cooling through hole 172 of the housing 130, the joint member 177b, the pipe arrangement 190, the joint member 177a, the cooling through hole 171 of the housing 130, the joint member 176a, the pipe arrangement 190, the joint member 176d, the cooling through hole 174 of the housing 130, the joint member 177d, the pipe arrangement 190, the joint member 177c, the cooling through hole 173 of the housing 130, the joint member 176c, and the pipe arrangement 190 for cooling medium discharge. The housing 130 is cooled down by such a flow of the cooling medium.

Thus, according to the bearing device in the present embodiment, the bearing device is uniformly cooled down in the circumferential direction of the housing 130. Therefore, the housing 130, the rolling bearings 120A and 120B, ends 112 of the screw shaft 110 are cooled down uniformly in the circumferential direction, so that the thermal deformation can be suppressed. Together with this, since the rolling bearings 120A and 120B are cooled down in an efficient manner, the load distribution abnormality or degradation in operation performance of the balls in the rolling bearings 120A and 120B can be prevented..

Herein, as a modification in the present embodiment, in the ball screw device 1, the bearing device 101 may support one end of the screw shaft 110. Then, in the ball screw device 1, in the bearing device 101 supporting one end of the screw shaft 110, plural cooling through holes 171 to 174, penetrating through both ends of the housing 130, allowing passage of the cooling medium may be arranged in the axial direction of the housing 130, whereas in the bearing device supporting the other end of the screw shaft 110, no cooling through hole for allowing the passage of the cooling medium may be arranged.

In addition, in the ball screw device 1, the bearing device 101 may support both ends of the screw shaft 110. Then, in each of the bearing devices 101, the plural cooling through holes 171 to 174 penetrating through both ends of the housing 130, allowing the passage of the cooling medium may be arranged in the axial direction of the housing 130.

Further, for example, as described in PLT 2, in a ball screw including the cooling mechanism only at the nut, the screw shaft is cooled down only in the moving range of the nut, and the cooling effect to the end of the screw shaft cannot be expected. Therefore, it is useful to use the above-described bearing device together.

To be specific, as illustrated in FIG.. 7, the ball screw device 1 includes the ball screw 10, and the above-described bearing device 101 supporting the screw shaft 110 of the ball screw 10.

Herein, in the nut 20 of the ball screw 10, plural cooling through holes 21a to 21d penetrating through the nut 20 in the axial direction are formed at an equal interval in the circumferential direction. Joint members 31a to 31d and 32a to 32d are respectively coupled to both ends of the cooling through holes 21a to 21d of the nut 20.

Then, the joint member 31a and the joint member 31d on a flange 22 side are coupled by a pipe arrangement 33. In addition, a pipe arrangement 34 for cooling medium introduction is connected to the joint member 31b on the flange 22 side. Further, a pipe arrangement 35 for cooling medium discharge is connected to the joint member 31c on the flange 22 side.

On the other hand, at the end of the side where no flange 22 of the nut 20 is arranged, a joint member 32a and a joint member 32b are coupled by a pipe arrangement 36, and a joint member 32c and a joint member 32d are coupled by a pipe arrangement 37.

In the ball screw 10 having such a configuration, by introducing the cooling medium from the pipe arrangement 34 for cooling medium introduction, the cooling medium is configured to flow sequentially in an order of the joint member 31b, the cooling through hole 21b, the pipe arrangement 36, the joint member 32a, the cooling through hole 21a, the joint member 31a, the pipe arrangement 33, the joint member 31d, the cooling through hole 21d, the pipe arrangement 37, the cooling through hole 21c, the joint member 31c, and the pipe arrangement 35 for cooling medium discharge As a result, the nut 20 is cooled down by this flow of the cooling medium.

### (Second embodiment)

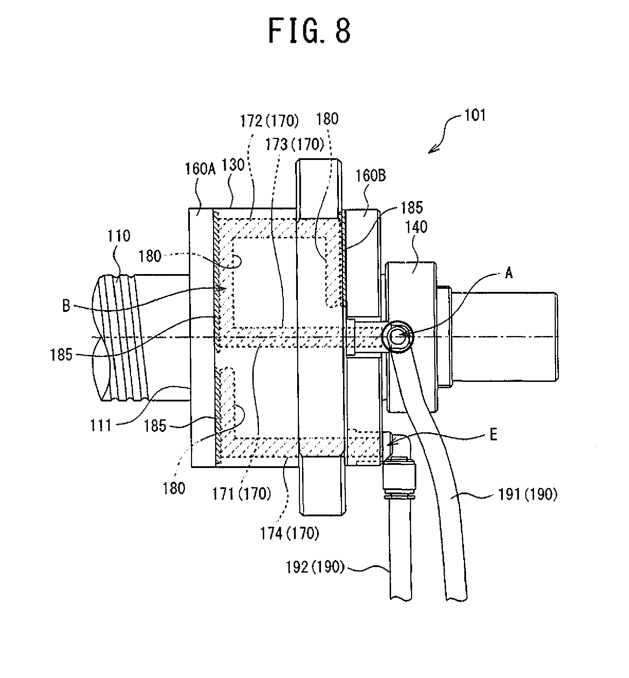

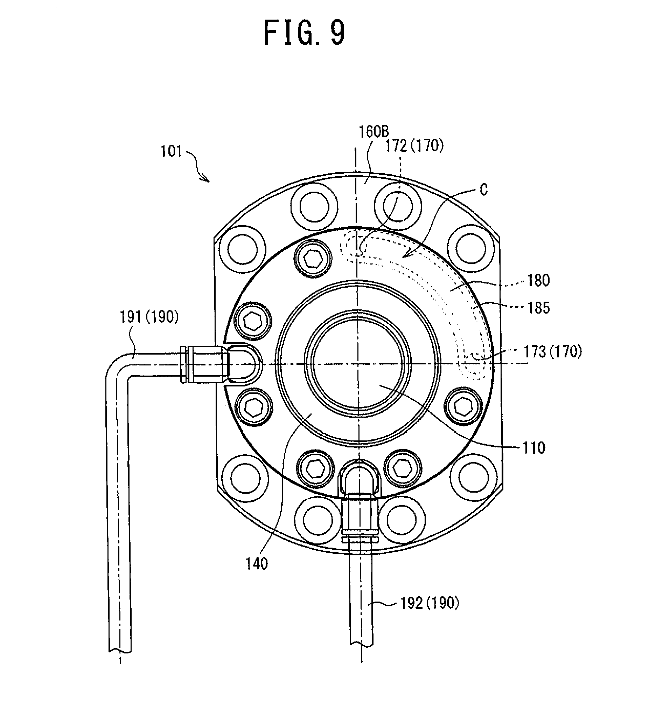

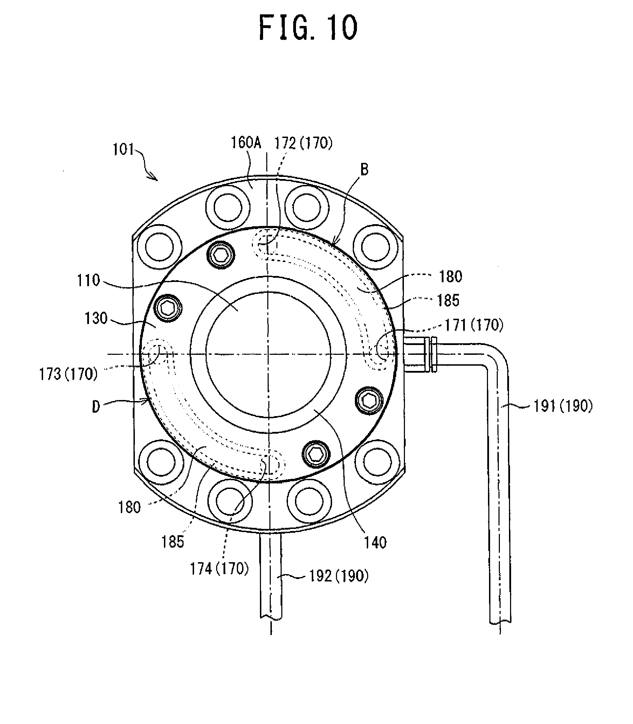

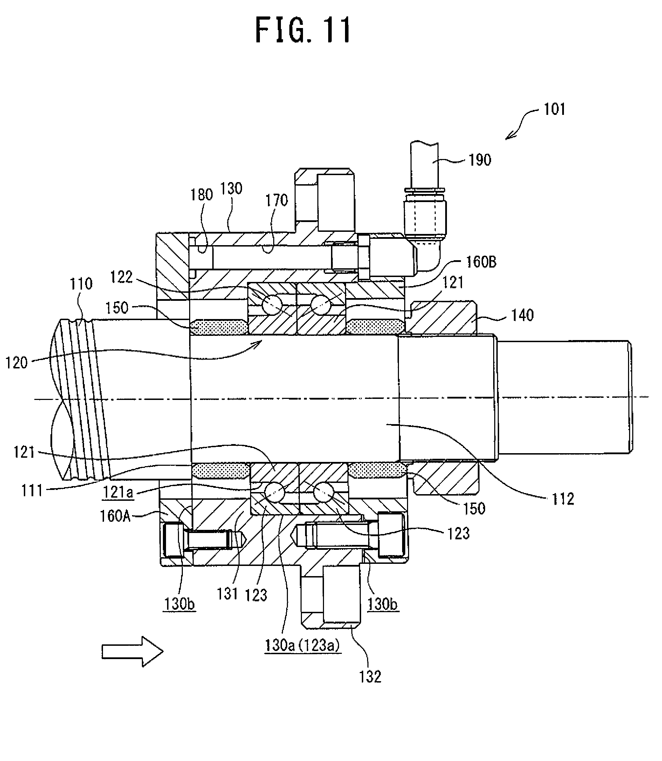

Next, the ball screw device in a second embodiment will be described with reference to the drawings. FIG. 8 is a front view illustrative of the ball screw device in the second embodiment of the present disclosure. In addition, FIG. 9 is a right side view illustrative of a configuration of the ball screw device in the second embodiment of the present disclosure. Further, FIG. 10 is a left side view illustrative of a configuration of the ball screw device in the second embodiment of the present disclosure. Moreover, FIG. 11 is a cross-sectional view in an axial direction illustrative of a configuration in the second embodiment of the ball screw.

As illustrated in FIG. 8 to FIG.. 11, the bearing device 101 includes plural rows of rolling bearings 120 that rotatably supports the screw shaft 110 of the ball screw, and the housing 130 that accommodates the rolling bearing 120.

### (Rolling bearing)

As illustrated in FIG. 11, the rolling bearing 120 includes two inner rings 121 fit with an end of the screw shaft 110 and rotating integrally with the screw shaft 110, and the inner circumferential surfaces 121a of the inner rings 121 have outer rings 123 rotatably supporting the inner rings 121 through plural rolling elements 122, respectively.

The inner rings 121 of the rolling bearing 120 are positioned at predefined positions by a step portion and the lock nut 140 formed in the screw shaft 110.. The lock nut 140 is screwed and fit with an end of the screw shaft 110, and a collar 150 made of, for example, a belleville spring, coil spring, a metal of vertical elastic coefficient, or the like is arranged at an outer circumference of the screw shaft 110 between the lock nut 140 and the inner ring 121.

In addition, the inner ring 121 of the rolling bearing 120 is subject to a pressing force of the above-described step portion 111 by a fastening force of the lock nut 140, and the collar 150 made of, for example, a belleville spring, coil spring, a metal of vertical elastic coefficient, or the like is arranged at an outer circumference of the screw shaft 110 between the lock nut 140 and the inner ring 121.

It is to be noted that the inner rings 121 of the rolling bearing 120 are positioned at predefined positions by a step portion 111 and the lock nut 140 formed in the screw shaft 110.

### (Housing)

For example, the housing 130 has a cylindrical shape. In addition, as illustrated in FIG. 11, an inner circumferential surface 130a of the housing 130 fits with an outer circumferential surface (i.e., outer circumferential surface 123a of the outer ring 123) of the rolling bearing 120. Thus, the housing 130 is configured to rotatably support the screw shaft 110.

Further, as illustrated in FIG. 11, the outer circumferential surface of the housing 130 is slidably fit with the inner circumferential surface of a bearing support, not illustrated. In other words, the bearing support (not illustrated) supports the rolling bearing 120 via the housing 130.

### (Pressing lid)

The outer rings 123 of the rolling bearing 120 are positioned at predefined positions by a step portion 131 and a second pressing lid 160B formed at the inner circumferential surface 130a of the housing 130. The pressing lids 160A and 160B are attached to end faces 130b in an axial direction of the housing 130 by plural bolts 200 (see FIG. 11).

### (Cooling through hole)

The housing 130 has plural cooling through holes 170 penetrating through both ends (end faces) of the housing 130 in the axial direction. The cooling through holes 170 are located along the outer circumferential surface of the housing 130 or on an identical circumference, in one embodiment. The cooling through holes 170 are located equally, in another embodiment. It is to be noted that the cooling through holes 170 are provided for allowing the passage of the cooling medium). The cooling medium is supplied or discharged by a cooling pipe 190 coupled with any one of the plural cooling through holes 170. The cooling pipe 190 is coupled to a cooling medium circulation device (not illustrated) for supplying the cooling medium, and collecting the cooling medium to provide a cooling function again and then supply the cooling medium again.

### (Channel)

End faces 130b of the housing 130 have channels 180 to communicate with opening portions of the cooling through holes 170 along the end faces 130b, respectively, in one embodiment.. The channels 180 arranged as described above are sealed with the first pressing lid 150A or the second pressing lid 160B via a gasket 185, so that flow paths B to D (see FIG. 9 and FIG. 10) communicating with the cooling through holes 170 are formed. By employing an embodiment in which the channels 180 are arranged, the number of parts for supplying the cooling medium for allowing the passage through the cooling through holes 170 is reduced, as compared to an embodiment in which only the cooling through holes 170 are arranged in the housing 130. As a result, a cost reduction is achievable.

Herein, as described above, the flow path is configured with the channel 180 and either the first pressing lid 160A or the second weight lid 160B, but a face opposed to the channels 180 of the first pressing lid 160A and the second pressing lid 160B is a flat one, in one embodiment. When another channel corresponding to the channel 180 at the face opposed to the channels 180 of the first pressing lid 160A and the second pressing lid 160B is formed, the flow path is not formed desirably by a mismatching combination with the flange, in some cases. Thus, the processing cost can be reduced, and the product management is easy

### (Arranged location of cooling through hole)

As arranged locations of the plural cooling through holes 170, the plural cooling through holes 170 are equally arranged in the circumferential direction of the housing 130, in one embodiment.. However, in a case where there are two cooling through holes 170, that is, in a case where the cooling through holes 170 are equally arranged (180-degree equal arrangement), since the temperatures rise in parts apart from the cooling through holes 170, a temperature gradient is produced and the cross-section of the outer ring 123 of the rolling bearing 120 has a rugby ball-like shape. Hence, the circularity (cylindricity) of the outer ring 123 of the rolling bearing 120 degrades and the load is non-uniformly applied onto the rolling bearing 120. The operation performance is easily affected, and this is undesirable.

### (The number of cooling through holes)

In addition, by increasing the number of the cooling through holes 170, it can be considered that a greater cooling effect of the rolling bearing 120 is obtainable and the circularity (cylindricity) of the outer ring 123 of the rolling bearing 120 improves. The number of the cooling through holes 170, however, should not be increased without moderation. This is because an increase in the number of the cooling through holes 170 also means a degradation in the strength of the housing 130, and will lead to a degradation in support stiffness of the ball screw shaft, as a result.

In addition, in the processing of the cooling through holes 170, a great longitudinal length ratio will increase the cost due to care-needed processing.

Thus, in the present embodiment, as illustrated in FIG. 8 to FIG. 10, there are four cooling through holes 170, but three cooling through holes 170 may be provided, if it is difficult to equally arrange four cooling through holes 170 depending on the structure.

### (Circulation path of cooling medium)

In the bearing device 101 in which the cooling through holes 170 are formed as described above, as illustrated in FIG. 8 to FIG. 10, the cooling medium that has been supplied from the cooling pipe 191 flows into a cooling through hole 171 coupled at an "A" part with a cooling pipe 191, flows through a flow path "B" into a cooling through hole 172, flows through a flow path "C" into a cooling through hole 173, flows through a flow path "D" into a cooling through hole 174, and is discharged from a cooling pipe 192 coupled at an "E" part.

In this manner, in the bearing device 101, plural cooling through holes 170 are provided at the housing 130, and the cooling medium is made to flow through the cooling through holes 170 and the flow paths configured with the channel 180 and either the first pressing lid 160A or the second pressing lid 160B. The immediate vicinity of the bearing that is a heat generation source can be cooled down efficiently. As a result, the heat generation of the rolling bearing 120 can be suppressed, and an elongation between the ball screw and the screw shaft 110 caused by the thermal expansion can be decreased, so that the positioning accuracy and the like can be improved.

In addition, by arranging the cooling through holes 170 equally, the temperature distribution tends to be uniform and non-uniform thermal deformation can be suppressed. Therefore, it is possible to prevent the load distribution abnormality or degradation in the operation performance of the balls (the rolling elements 122) in the inside of the rolling bearing 120. Herein, in the bearing device 101, the cooling pipes 190 (191 and 192) may be located on the end 112 side of the screw shaft 110 (where no screw groove is formed). In addition, in the bearing device 101, the cooling pipes 190 (191 and 192) may be located on the flange 132 side.

By locating the cooling pipes 190 (191 and 192) on the end 112 side of the screw shaft 110, that is by locating the cooling through holes 170 on the end 112 side of the screw shaft 110, the moving range of the nut (not illustrated) of the ball screw is affected less than a case where the cooling through holes 170 are located on the side where the screw groove of the screw shaft 110 is formed. Thus, the moving range of the nut (not illustrated) of the ball screw can be made wider.

Further, in a case where the cooling pipes 190 (191 and 192) are located on the flange 132 side, that is the cooling through holes 170 are located on the flange 132 side, the housing 130 can be assembled with a housing securing member (for example, a bearing support), not illustrated, with the cooling pipes 190 (191 and 192) being assembled. Specifically, in the assembling of the housing 130 with the housing securing member, the housing securing member is to be assembled with the housing 130 in a direction of an arrow in FIG. 11. In other words, when the cooling pipes 190 (191 and 192) are arranged on the side where no flange 132 is arranged in the housing 130 (where the first pressing lid 160A is arranged), the cooling pipes 190 (191 and 192) have to be assembled after the housing 130 is assembled with the housing securing member. However, in an embodiment where the cooling pipe 190 (191 and 192) are located on the flange 132 side, the cooling pipes 190 (191 and 192) do not interfere in the assembling of the housing 130 with the housing securing member. Thus, the arrangement of the cooling pipes 190 (191 and 192) on the flange 132 side allows assembling of the housing 130 with the above-described housing securing member with the cooling pipes 190 (191 and 192) being assembled.

### (Third embodiment)

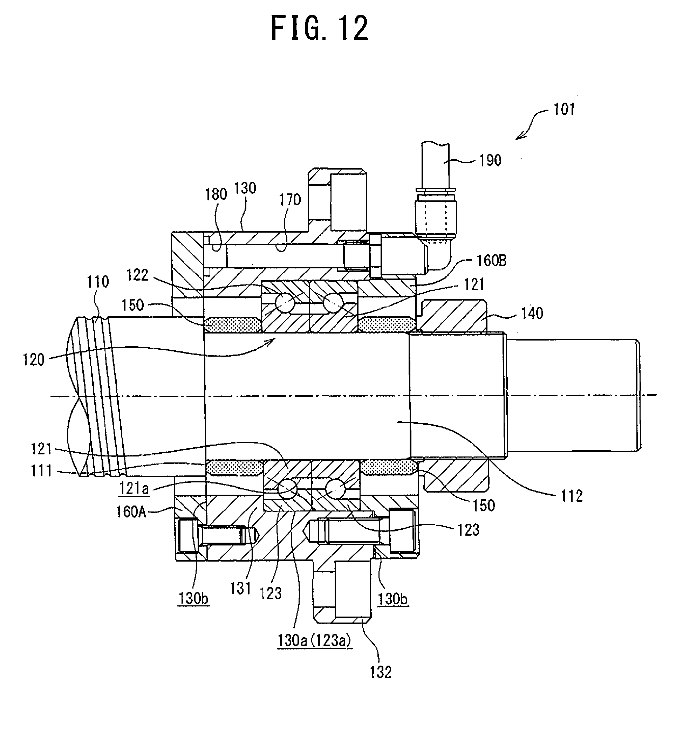

Next, a ball screw device in a third embodiment will be described with reference to the drawings. FIG. 12 is a cross-sectional view in an axial direction illustrative of a configuration in the third embodiment of the ball screw. A ball screw device 301 in the present embodiment has a configuration substantially similar to that of the second embodiment. Hereinafter, the same components and configurations as those employed in the second embodiment have the same reference numerals and a detailed explanation will be omitted, and different configurations will be mainly described.

As illustrated in FIG. 12, the rolling bearing 120 has two inner rings 121 fit with an end of the screw shaft 110 and rotating integrally with the screw shaft 110, and the inner circumferential surfaces 121a of the inner rings 121 have outer rings 123 rotatably supporting the inner rings 121 through plural rolling elements 122, respectively.

The outer rings 123 of the rolling bearing 120 are positioned at predefined positions by a step portion 131 formed on an inner circumferential surface 130a of the housing 130 and a second pressing lid 160B.

The inner rings 121 of the rolling bearing 120 are positioned at predefined positions by a screw shaft outer diameter portion 111 formed at the screw shaft 110 and the lock nut 140 via the collar 150. The lock nut 140 is screwed and fit with an end of the screw shaft 110, and the fastening force of the lock nut 140 applies a compressive force in the axial direction onto the inner ring 121 of the rolling bearing 120, so that a preload of the rolling bearing 120 is given.

The rolling bearing used in the ball screw device, in one technology, has to be subject to the load not only in the axial direction (axially) but also in the radial direction (radially). Hence, angular ball bearings or tapered roller bearings are often used. In the present embodiment, a combination type of the rolling bearings 120 is configured to be a DB type (back face combination type), which is a system of giving a preload by applying a compressive force in the axial direction onto the inner ring side of the rolling bearing 120. In the present embodiment, two angular ball bearings used in combination in the rolling bearing 120 will be described.

In the bearing device 101, by cooling down the bearing device 101, the temperature of the outer ring side of the rolling bearing 120 is made lower than that of the inner ring side. For this reason, the outer ring side of the rolling bearing 120 shrinks in the radial direction, and in addition, it shrinks in the axial direction. In the DB type (back face combination type), a preload is given by applying the compressive force in the axial direction onto the inner ring side of the rolling bearing 120. However, the shrinkage in the radial direction on the outer ring side of the rolling bearing 120 caused by the cooling leads to an increase in the preload, but the shrinkage in the axial direction leads to a decrease in the preload. Therefore, even by the cooling, a few changes in the preload is achievable.

On the other hand, a description will be given of a case where the combination type of the rolling bearings 120 is configured to be a DF type (front face combination type), which is a system of giving a preload by applying a compressive force in the axial direction onto the outer ring side of the rolling bearing 120. By the cooling, when the temperature of the outer ring side of the rolling bearing 120 is made lower than that of the inner ring side, the outer ring side of the rolling bearing 120 shrinks in the radial direction, and in addition, it shrinks in the axial direction. In the case of the DF type (front face combination type), the shrinkage in both of the radial direction and the axial direction on the outer ring side of the rolling bearing 120 caused by the cooling will lead to an increase in the preload. Such an increase in the preload will increase the amount of heat generation, and an effect brought out by the cooling will be damaged.

In the present embodiment, two angular ball bearings used in combination in the rolling bearing 120 have been described.. However, as long as the combination type of the rolling bearings is the DB type (back face combination type), any number of the angular ball bearings may be used without limiting to two angular ball bearings. In addition, in the present embodiment, the case where a single-row of the angular ball bearing is used for the rolling bearing 120 has been described. However, as long as the DB type (back face combination type) is used, another type of bearing such as a single-row tapered bearing can be used. In addition, plural-row bearings such as plural-row angular ball bearings or plural-row tapered roller bearings, each of which is a system (DB type) of applying a preload by adding a compressive force in the axial direction on the inner ring side, can be used.

### (Fourth embodiment)

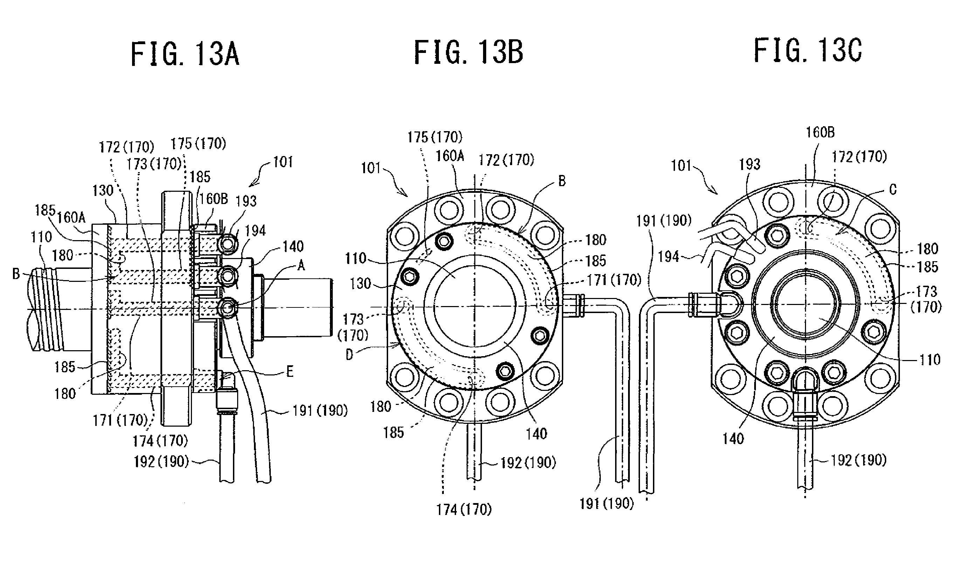

Next, a ball screw device in a fourth embodiment will be described with reference to the drawings. FIG. 13A to FIG. 13C are views illustrative of a configuration of the ball screw device in the fourth embodiment. FIG. 13A is a front view, FIG. 13B is a left side view, and FIG. 13C is a right side view. A bearing device 101 in the present embodiment has a configuration substantially similar to that of the second embodiment. Hereinafter, the same components and configurations as those employed in the second embodiment have the same reference numerals and a detailed explanation will be omitted, and different configurations will be mainly described.

As illustrated in FIG. 13A, in the bearing device 101, plural subsidiary cooling through holes 175 are arranged similarly to the plural cooling through holes 170 in order to improve the cooling effect. Then, the subsidiary cooling through holes 175 are coupled to a cooling pipe 193 for flowing in the cooling medium into the subsidiary cooling through hole 175, and cooling pipe 194 for discharging the cooling medium from the subsidiary cooling through hole 175. In addition, the subsidiary cooling through holes 175 may be coupled with cooling through holes 171 to 174 depending on the purpose, or may be arranged independently of the cooling through holes 171 to 174.

The provision of the cooling through holes (subsidiary cooling holes) 175 further improves the cooling efficiency.

It is to be noted that as illustrated in FIG. 13B and FIG. 13C, the subsidiary cooling through holes 175 may be arranged at locations to be point symmetric with the screw shaft 110 being as a reference.

### (Fifth embodiment)

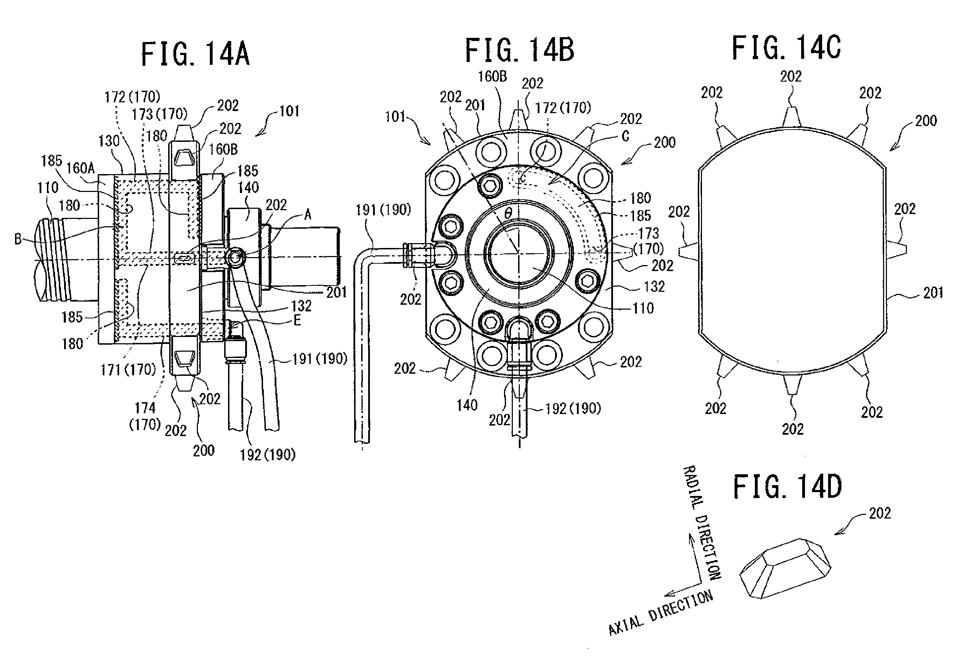

Next, a ball screw device in a fifth embodiment will be described with reference to the drawings. FIG. 14A to FIG. 14D are views illustrative of a configuration of the ball screw device in the fifth embodiment. FIG. 14A is a front view, FIG. 14B is a left side view, FIG. 14C is a right side view of a heat dissipation portion, and FIG. 14D is a perspective view of a fin. A bearing device 101 in the present embodiment has a configuration substantially similar to that of the second embodiment. Hereinafter, the same components and configurations as those employed in the second embodiment have the same reference numerals and a detailed explanation will be omitted, and different configurations will be mainly described.

As illustrated in FIG. 14A to FIG. 14D, in the bearing device 101, a heat dissipation portion 200 is provided at the housing 130. The heat dissipation portion 200 includes a frame body 201 to fit within the outer circumferential surface of the housing 130 (for example, flange 132) by a predefined fitting margin, and plural fins 202 arranged at an outer circumferential surface of the frame body 201.

As illustrated in FIG. 14D, the fin 202 is arranged to have a tapered shape in a direction perpendicular to the axial direction (i.e., in a radial direction) when the fin 202 is arranged at the housing 130 so that the heat accumulated in the housing 130 can be easily dissipated.. In addition, the end of the fin 202 is made thin, in one embodiment, so as not to disturb the movement of the nut when the fin 202 receives air resistance Also, the fins 202 are equally arranged in the circumferential direction of the frame body 201, in one embodiment.. The fins 202 are equally arranged within a range of 15 degrees to 90 degrees of an angle formed by arranged locations of the adjacent fins 202 and the axial direction of the frame body 201, in one embodiment.

Here, as materials of the frame body 201 and the fins 202, aluminum, yellow steel, and titanium, which are good in heat conductance, are given. Among them, as to aluminum, the frame body 201 and the fins 202 are easily processed and the coefficient of thermal conductivity is high.

### (Sixth embodiment)

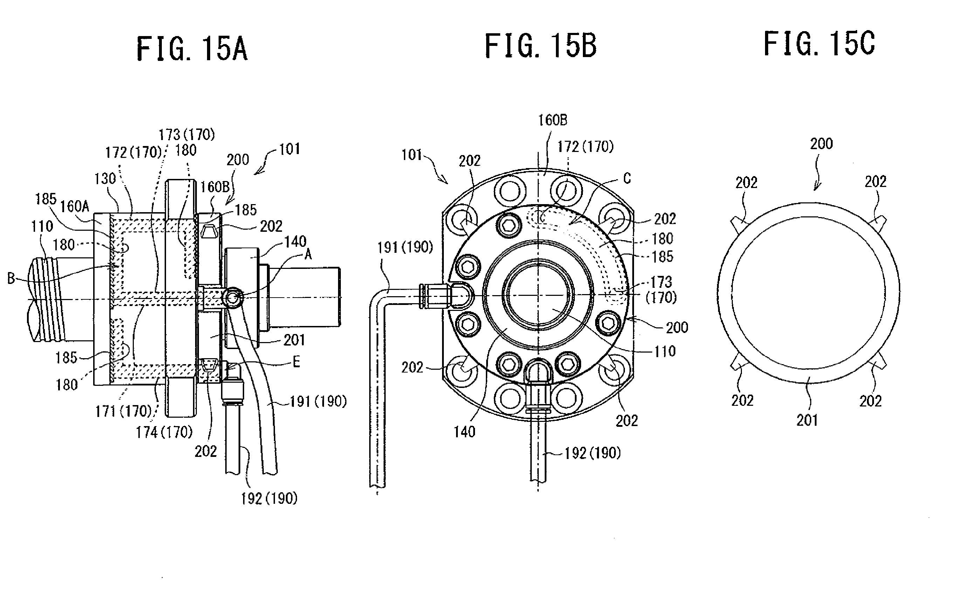

Next, a ball screw device in a sixth embodiment will be described with reference to the drawings.. FIG. 15A to FIG. 15C are views illustrative of a configuration of the ball screw device in the sixth embodiment.. FIG. 15A is a front view, FIG. 15B is a right side view, and FIG. 15C is a right side view of a frame body provided with a fin. The bearing device 101 in the present embodiment has a configuration substantially similar to that of the fifth embodiment. Hereinafter, the same components and configurations as those employed in the fifth embodiment have the same reference numerals and a detailed explanation will be omitted, and different configurations will be mainly described.

As illustrated in FIG. 15A to FIG. 15C, in the bearing device 101, the heat dissipation portion 200 is arranged at the housing 130. The heat dissipation portion 200 includes a frame body 201 fit with an outer circumferential surface of the pressing lid 160B by a predefined fitting margin, and plural fins 202 arranged at the outer circumferential surface of the frame body 201.

### (Seventh embodiment)

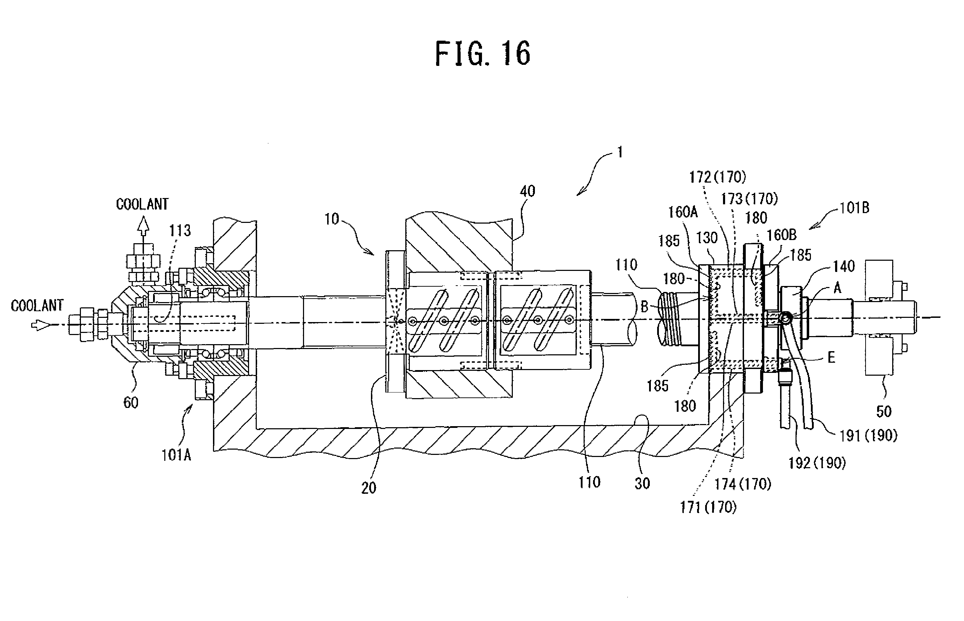

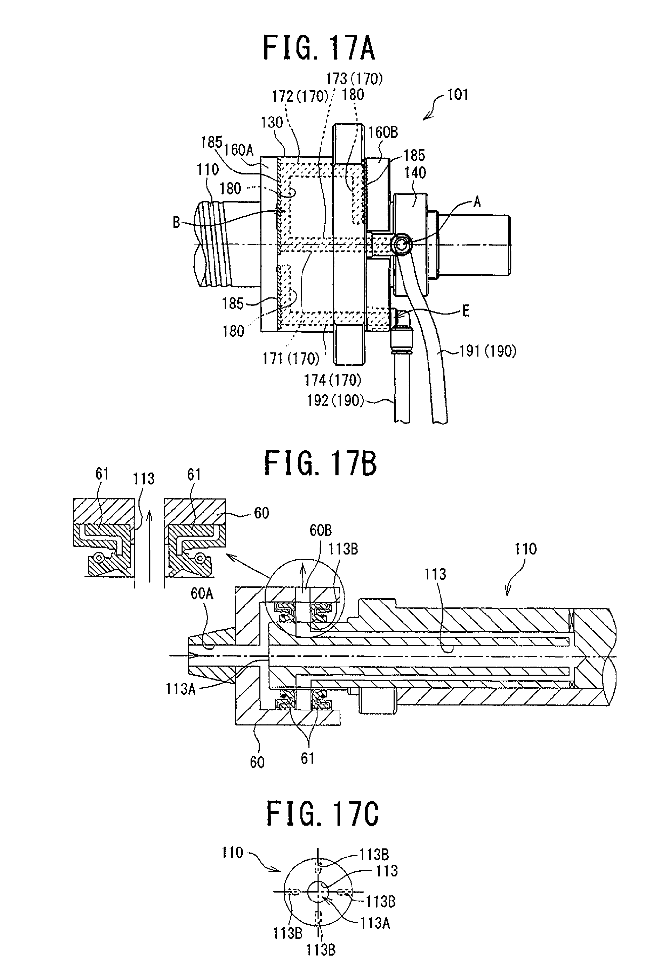

Next, a ball screw device in a seventh embodiment will be described with reference to the drawings. FIG. 16 is a front view illustrative of the ball screw device in the seventh embodiment. FIG. 17A to FIG. 17C are views illustrative of a configuration of the ball screw device in the seventh embodiment. FIG. 17A is a front view of the ball screw device on a non-motor side in the ball screw device, FIG. 17B is a cross-sectional view in the axial direction of the screw shaft and an enlarged view illustrative of substantial parts, and FIG. 17C is a left side view of the screw shaft.

As illustrated in FIG. 16, in the ball screw device 1, both shaft ends of the screw shaft 110 of the ball screw 10 are rotatably supported by a bracket 30 via the bearing devices 101A and 101B, and the nut 20 is secured onto the table 40.

Then, a drive pulley 50 is attached to one end (shaft end on the right side in the drawing) of the screw shaft 110, the rotational movement of the electric motor (not illustrated) is transmitted to the drive pulley 50 through a power transmission mechanism, and the ball screw 10 is to be driven. Hereinafter, the bearing device 101B of the near side of the drive pulley 50 (near side of the electric motor, not illustrated) will be referred to as "motor side bearing device 101B", whereas the bearing device 101A of the far side of the drive pulley 50 (far side of the electric motor, not illustrated) will be referred to as "non-motor side bearing device 101A". In addition, the bearing devices 101A and 101B in the present embodiment are the bearing device having similar configuration of the bearing device 101 (see FIG. 17A).

Herein, the ball screw device 1 is configured to include a screw shaft 110, a nut 20, and balls rollably loaded in spiral grooves formed to face each of the outer circumferential surface of the screw shaft 110 and the inner circumferential surface of the nut 20. Then, when the nut 20 into which the screw shaft 110 is screwed via the balls and the screw shaft 110 are made to relatively rotate, the screw shaft 110 and the nut 20 relatively move through the rolling of the balls in the axial direction.

In addition, as illustrated in FIG. 16 and FIG. 17B, cooling passages 113 for allowing passage of the cooling medium are bored in the vicinities of the end of the side supported by the non-motor side bearing device 101A in the screw shaft 110. The cooling passages 113 are bored to the locations respectively corresponding to plural bearings configuring the non-motor side bearing device 101A in the axial direction of the screw shaft 110.

To be specific, the cooling passage 113 is bored from an inlet 113A opened at an end of the non-motor side bearing device 101A of the screw shaft 110 to the location corresponding to the plural bearings included in the non-motor side bearing device 101A, and then at this location, the cooling passage 113 is folded to an end side of the screw shaft 110 so as to be communicated with outlets 113B opened at side faces in the vicinities of the end.

Then, an inflow side sealing 60 is attached via an outflow side sealing 61 to an end of the non-motor side bearing device 101A of the screw shaft 110. The inflow side sealing 60 has an inlet 60A communicating with the inlet 113A and outlets 60B respectively communicating with the outlets 113B, and the inlet 60A and the outlets 60B are connected to a cooling medium circulation device, not illustrated, through pipe arrangements. It is to be noted that the cooling medium circulation device may correspond to the above-described cooling medium circulation device.

Thus, in the present embodiment, cooling of "the non-motor side bearing device 101A" is achieved by "cooling of the nut" and "cooling of the inside of the screw shaft 110", whereas cooling of "the motor side bearing device 101B" is achieved by "cooling of the nut". This is because it is difficult to cool down the inside of the screw shaft 110 by providing the cooling through holes at an end of the screw shaft 110 on the motor side, since the end of the screw shaft 110 is connected to the electric motor (not illustrated). Therefore, in the present embodiment, the cooling through holes are arranged in the vicinities of the end of the screw shaft 110 on a side supported by the non-motor side bearing device 101A. It is to be noted that in the present embodiment, the temperatures of the cooling medium on the non-motor side bearing device 101A are higher than those on the motor side, so that the securing force of the non-motor side bearing device 101A should not drop due to a reduction in the temperature of the cooling medium on the non-motor side bearing device 101A.

PLT 3 discloses that a flow path hole inside the ball screw shaft, formed by penetrating through the inside of the ball screw shaft, for flowing the cooling fluid.

Since the screw shaft having such a flow path hole inside the shaft is a "penetrating" hollow shaft, the deflection due to the bending moment is larger than that of a solid shaft Therefore, the screw shaft having a flow path hole inside the shaft has a larger repeating shear stress generated in every rotation than that of a solid screw shaft Therefore, the screw shaft having such a flow path hole inside the shaft produces more heat than that of the solid screw shaft, and has high temperatures The cooling fluid (cooling medium) passing through the flow path hole inside the shaft is warmed up, and thus the cooling effect disappears.

In contrast, in the ball screw device in the present embodiment, the cooling through holes to allow passage of the cooling medium are bored in the screw shaft 110, and the cooling through holes are respectively bored to the locations corresponding to the plural bearings in the axial direction of the screw shaft 110 With such a configuration, the cooling through holes in the present embodiment bring out effects of improving the stiffness with respect to the bending moment, as compared with a cooling through hole is "penetrated" through the screw shaft in one technology.

Thus, according to the present embodiment, while reducing the deflection of the screw shaft caused by the bending moment of at the time of driving the ball screw device, it is possible to provide a ball screw device that improves the cooling efficiency..

### (Eighth embodiment)

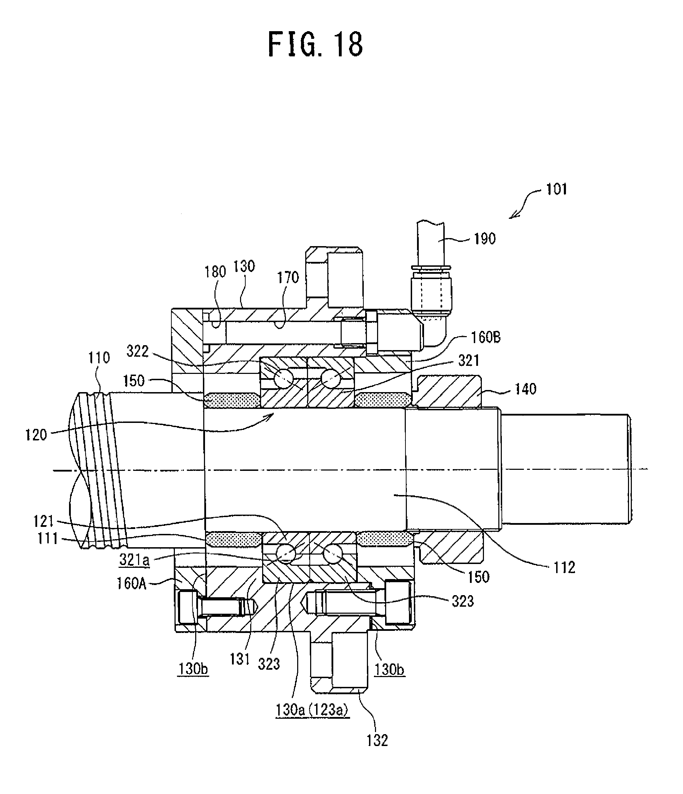

Next, a ball screw device in an eighth embodiment will be described with reference to the drawings. FIG. 18 is a cross-sectional view in the axial direction illustrative of a configuration of the ball screw device in the eighth embodiment The bearing device 101 in the present embodiment has a configuration substantially similar to that of the second embodiment. Hereinafter, the same components and configurations as those employed in the second embodiment have the same reference numerals and a detailed explanation will be omitted, and different configurations will be mainly described.

As illustrated in FIG. 18, the ball screw device in the present embodiment has the bearings 101 configured to be the DF combination. In one technology, the application of a pretension is given as a method of canceling the thermal expansion of the screw shaft 110. Such a pretension is a process of applying a pretension corresponding to an increase of approximately 2°C to 3°C in temperature of the bearing shaft 101, in order to perform the positioning with accuracy when the bearing 101 is attached to the screw shaft 110. The load of the bearing 101 is increased by applying such a pretension, and the heat generation cannot be avoided. As a result, the heat is transmitted to the screw shaft 110, and plays a factor of expanding the screw shaft 110 again. In particular, it is difficult to bring out an effect of suppressing the thermal expansion by merely cooling down the bearings of the DB combination.

Thus, in the ball screw device in the present embodiment, the bearings 101 are configured to be the DF combination and to be cooled down, so as to alleviate the stress generated by the thermal expansion.

### (Ninth embodiment)

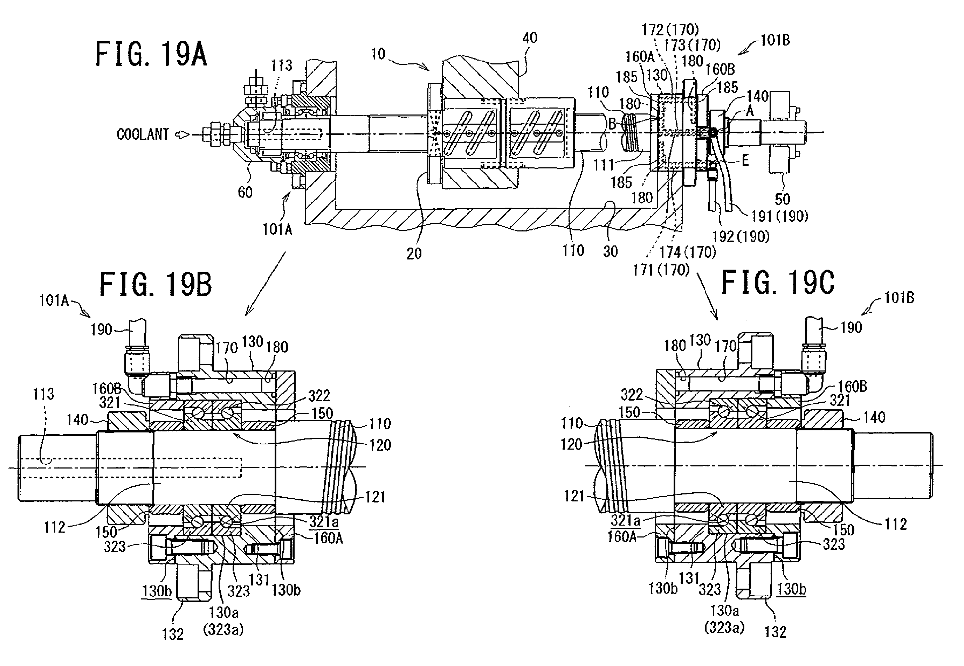

Next, a ball screw device in a ninth embodiment will be described with reference to the drawings. FIG. 19A to FIG.. 19C are views illustrative of a configuration of the ball screw device in the ninth embodiment. FIG. 19A is a front view of the ball screw device, FIG. 19B is a front view of the non-motor side ball screw device in the ball screw device, and FIG. 19C is a front view of the motor side ball screw device in the ball screw device. It is to be noted that the inflow side sealing 60 is omitted in FIG. 19A. The bearing device 101 in the present embodiment has a substantially similar configuration to that of the bearing device in the seventh present embodiment. Hereinafter, the same components and configurations as those employed in the seventh embodiment have the same reference numerals and a detailed explanation will be omitted, and different configurations will be mainly described..

As illustrated in FIG. 19A to FIG. 19C, the ball screw device in the present embodiment is configured to be a DB form (DB combination) of a combination of the bearings on both ends supporting the ball screw device. With such a configuration, an effect of not deflecting the screw shaft is brought out. In addition, since the temperatures of the bearings in the motor side bearing device 101B are increased by the heat generation of the motor, it is necessary to lower the temperatures of the bearings in the motor side bearing device 101B. Therefore, the temperature of the cooling medium of the cooling water is made lower than that of the non-motor side bearing device 101A, or the amount of the cooling medium is increased.

Further, as a combination of the bearings, the motor side bearing device 101B is configured to be the DB form (DB combination) and the DT form (DT combination), the non-motor side bearing device 101A is configured to be the DB form (DB combination), the DT form (DT combination), the DF form (DF combination), or a single row.

Furthermore, end deflector type, tube type, roller type, end cap type are given as a ball screw supported by the ball screw device in the present embodiment. In particular, by configuring the bearings of the bearing device on the motor side as the DB form (DB combination), the effect of not rotating or swing the screw shaft is brought out.

Heretofore, the ball bearing devices in the respective embodiments have been described. However, the present invention is not limited to them. It should be apparent that modifications and adaptations to those embodiments may occur. For example, the plural rows of rolling bearings have been described as the bearings of supporting the screw shaft of the ball screw, in the above-described embodiments. However, the present invention is not limited to this. A single row of rolling bearing may be applicable.. In addition, the ball screw device in each of the respective embodiments is used together with a nut cooling device for cooling down the nut, in another embodiment. In the cooling of the ball screw shaft core, the bearing is also cooled down, since a cooling passage is formed in the inside of the screw shaft In the cooling of the nut, however, only the part where the nut moves is cooled down, and using together is effective when the cooling effect to the bearing cannot be expected. For this reason, in the cooling of the nut, it is also necessary to cool down the bearing. Further, each of the embodiments may be combined together appropriately.

For the cooling medium in the present invention, various gases and liquids can be used as a fluid. For the gas, not only air or compressed air but also nitrogen, inert gas (argon or the like), carbonhydride (butane, isobutane, or the like), helium, ammonia, carbon dioxide, or the like can be used. Further, any combination thereof can be used. For the liquid, not only water but also a coolant in which antirust is added to water, a coolant in which various additives are added to water, or various types of oil can be used as a cooling oil, too. Specifically, mineral oil, animal and vegetable oils, synthetic oil can be used. They should be selected depending on the use environment appropriately. Furthermore, the temperature of the cooling medium is controlled, and the flow amount is also controlled, in one embodiment. In particular, the cooling medium is used in a turbulence state, in one embodiment.

### Reference Signs List

- 1: ball screw device
- 10: ball screw
- 101: bearing device
- 110: screw shaft
- 120: rolling bearing
- 121: inner ring
- 122: rolling element
- 123: outer ring
- 130: housing
- 132: flange
- 140: lock nut
- 150: collar
- 160: pressing lid
- 170: cooling through hole
- 180: channel
- 190: cooling pipe

## Claims

1. A ball screw device, comprising:
a nut having a spiral groove formed on an inner circumferential surface;
a screw shaft having a spiral groove formed on an outer circumferential surface;
balls loaded in a raceway formed with the spiral groove of the nut and the spiral groove of the screw shaft; and
a bearing device configured to support an end of the screw shaft, the bearing device comprising:
a plurality of bearings having inner rings fit with the end of the screw shaft and rotating integrally with the screw shaft, and outer rings rotatably supporting the inner rings via a plurality of rolling elements arranged on outer circumferential surfaces of the inner rings; and
a housing having an inner circumferential surface abutting with the outer circumferential surfaces of the outer rings and rotatably supporting the screw shaft,
wherein a plurality of cooling through holes penetrating through both ends of the housing for allowing passage of a cooling medium are arranged in an axial direction of the housing.

2. The ball screw device according to claim 1, wherein the bearing device supports one of ends of the screw shaft.

3. The ball screw device according to claim 2, wherein the plurality of cooling through holes penetrating through the both ends of the housing and allowing the passage of the cooling medium are arranged in the axial direction of the housing, in the bearing device supporting the one of the ends of the screw shaft, and
another bearing device supporting the other one of the ends of the screw shaft does not have a cooling through hole.

4. The ball screw device according to claim 1, wherein the bearing device and another bearing device support both ends of the screw shaft, respectively.

5. The ball screw device according to claim 4, wherein the plurality of cooling through holes penetrating through the both ends of the housing for allowing the passage of the cooling medium are arranged in the axial direction of the housings in each of the bearing device or the another bearing device.

6. The ball screw device according to any one of claim 1 to claim 5, wherein the plurality of bearings are configured to be a DB type.

7. The ball screw device according to any one of claim 1 to claim 6, wherein each of the plurality of bearings is any one of a single-row angular ball bearing, a single-row tapered roller bearing, plural-row angular ball bearings, and plural-row tapered roller bearings.

8. The ball screw device according to any one of claim 1 to claim 7, wherein a channel communicating with at least one of the plurality of cooling through holes is formed at an end face of the housing.

9. The ball screw device according to any one of claim 1 to claim 7, wherein the plurality of cooling through holes are communicated by a pipe arrangement via a joint member at an outside of the housing.

10. The ball screw device according to any one of claim 1 to claim 9, wherein the plurality of cooling through holes are equally arranged in a circumferential direction of the housing.

11. The ball screw device according to any one of claim 1 to claim 10, wherein the plurality of cooling through holes include three to six cooling through holes.

12. The ball screw device according to any one of claim 1 to claim 11, wherein the plurality of cooling through holes are arranged on either an end side of the screw shaft or a flange side.

13. The ball screw device according to any one of claim 1 to claim 11, wherein a heat dissipation portion is arranged at the housing.

14. The ball screw device according to claim 8, further comprising pressing lids configured to limit movements of the outer rings in the axial direction, respectively,
wherein heat dissipation portions are arranged at the pressing lids, respectively.

15. The ball screw device according to any one of claim 1 to claim 14, wherein a cooling passage for allowing the passage of the cooling medium is bored in the screw shaft, and the cooling passage is bored to a location corresponding to the plurality of bearings in the axial direction of the screw shaft.

16. The ball screw device according to any one of claim 1 to claim 15, wherein at least one of the bearing device and another bearing device arranged at both ends of the ball screw, and the bearing device and the another bearing device are configured to be a DF type.
